# EUROPÄISCHE PATENTSCHRIFT

(11) **EP 0 818 630 B1**
(45) Veröffentlichungstag und Bekanntmachung des Hinweises auf die Patenterteilung: **08.03.2000**
(21) Anmeldenummer: 97810333.1
(22) Anmeldetag: 28.05.1997
(51) Int. Cl.: F16B 13/00

(54) **Selbstschneidender Hinterschnittanker**
Self cutting undercut fastening anchor
ncre autoforeuse à contre-dépouille

(30) Priorität: 10.07.1996 DE 19627774
(43) Veröffentlichungstag der Anmeldung: 14.01.1998
(73) Patentinhaber: HILTI Aktiengesellschaft, 9494 Schaan (LI)
(72) Erfinder: Beck, Hermann, 6807 Feldkirch-Tisis (AT); Gassner, Helmut, 9497 Triesenberg (LI); Hartmann, Markus, 6820 Frastanz (AT); Kossian, Susanne, 6800 Feldkirch (AT); Kussmaul, Rainer, Dr., 6712 Thüringen (AT); Lins, Reinhard, 9475 Sevelen (CH); Wisser, Erich, 6900 Bregenz (AT); Doppelbauer, Thomas, 6800 Feldkirch (AT)
(74) Vertreter: Wildi, Roland

(56) Entgegenhaltungen:
- EP-A- 0 724 085
- US-A- 4 702 654
- US-A- 4 789 284

## Beschreibung

Die Erfindung betrifft einen selbstschneidenden Hinterschnittanker gemäss dem Oberbegriff des Patentanspruchs 1.

In der Befestigungstechnik ist es vielfach erforderlich, weitgehend spreizdruckfreie Befestigungen zu erstellen. Insbesondere bei geringen Rand- und Achsabständen besteht bei Verankerungen mit konventionellen Spreizdübeln die Gefahr von Rissen oder sogar Abplatzern im Untergrund. Zu diesem Zweck sind Verankerungssysteme bekannt, bei denen ein spezielles Befestigungselement formschlüssig in einer Aufnahmebohrung verankert wird. Dazu wird eine zylindrische Aufnahmebohrung in einer definierten Tiefe mit einer Hinterschneidung versehen. Das in die vorbereitete Aufnahmebohrung einsetzbare Befestigungselement umfasst eine Ankerstange mit einem angeformten Konus, die durch die axiale Durchgangsbohrung einer Hülse geführt ist. Die Hülse ist mit ausstellbaren Segmenten ausgestattet, die durch die Relativverschiebung der Hülse und der Ankerstange in die Hinterschneidung ausstellbar sind.

Zur Erstellung der Hinterschneidung ist in den meisten Fällen ein spezielles Gerät erforderlich, welches eine in der Aufnahmebohrung exzentrisch umlaufende abrasive Schneide aufweist, mit der die Hinterschneidung in die Bohrlochwandung gefräst wird. Es sind auch Hinterschnittanker bekannt, welche sich beim Setzvorgang selbsttätig eine Hinterschneidung erzeugen. Ein derartiger selbstschneidender Hinterschnittanker ist beispielsweise in der US-A-4,702,654 beschrieben und besitzt eine Hülse, die an ihrem in Setzrichtung vorderen Ende Schneidlappen aufweist, die sich von einem plastischen Gelenk in Richtung des Konus am vorderen Ende der Ankerstange erstrecken. Die Schneidlappen sind durch das Aufschieben der Hülse auf den sich am Grund der Aufnahmebohrung abstützenden Konus radial ausstellbar. Indem die Hülse rotiert wird, fräsen die Schneiden der gegen die Bohrlochwandung gepressten Schneidlappen die Hinterschneidung in die Bohrlochwandung. Die Hülse wird solange axial gegen den Konus gepresst und rotiert, bis die Schneidlappen vollständig ausgestellt sind und die Hinterschneidung mit der gewünschen Hinterschnittiefe erstellt ist.

Die Hülse besteht üblicherweise aus Stahl und wird relativ aufwendig und teuer durch spanabhebende Formgebung hergestellt. Insbesondere die Herstellung der Schneidlappen und des plastischen Gelenks, um das die Schneidlappen ausstellbar sind, stellt hohe Anforderungen an den Herstellprozess. Aufgrund der hohen Belastung, der die Schneidlappen bei der Erstellung der Hinterschneidung ausgesetzt sind, ist die Wandstärke der Hülse relativ gross dimensioniert. Dies führt dazu, dass die Aufnahmebohrung im Vergleich zu der Ankerstange einen relativ grossen Durchmesser aufweisen muss. Die Schneiden an den Schneidlappen sind Hartmetallstifte, die im Bereich der freien Enden der Schneidlappen in die Oberfläche eingesetzt und verlötet sind. Bei der Herstellung der Hinterschneidung kann es vorkommen, dass die Hartmetallstifte aus den Ausnehmungen in den Schneidlappen herausfallen. Dies kann dazu führen, dass die Schneidlappen nur mehr unzureichende Schneideigenschaften aufweisen und dass die Hinterschneidung nicht mit der gewünschten Hinterschnittiefe und mit der radialen Gleichmässigkeit hergestellt wird. Es sind auch Hinterschnittanker bekannt, bei denen die Schneiden von gehärteten Zähnen an den freien Enden der Schneidlappen gebildet sind. Die Herstellung der gehärteten Schneidzähne ist jedoch relativ aufwendig, da insbesondere das plastische Gelenk, um das die Schneidlappen ausgeschwenkt werden, nicht spröde sein darf.

Der vorliegenden Erfindung stellt sich daher die Aufgabe diesen Nachteilen bei selbstschneidenden Hinterschnittankern des Stands der Technik abzuhelfen. Es soll ein Hinterschnittanker geschaffen werden, der sich beim Setzvorgang selbsttätig eine Hinterschneidung erzeugt, bei dem die Aufnahmebohrung im Verhältnis zur Ankerstange einen kleineren Durchmesser aufweisen kann als bei den Hinterschnittankern des Stands der Technik. Die Hülse mit den Schneidlappen soll einfach und kostengünstig herstellbar sein; aufwendige spanabhebende Herstellungsschritte sollen vermieden werden können. Die Schneiden an den Schneidlappen der Hülse sollen die gleichmässige und zuverlässige Herstellung der Hinterschneidung mit der gewünschten Hinterschnittiefe ermöglichen. Ein Verlust der Schneiden soll vermieden werden. Der Herstellprozess für die Schneiden soll einfach durchführbar sein und eine Versprödung des plastischen Gelenks soll verhindert werden.

Die Lösung dieser Aufgaben besteht in einem selbstschneidenden Hinterschnittanker mit den im Patentanspruch 1 angeführten Merkmalen. Der erfindungsgemässe selbstschneidende Hinterschnittanker besitzt eine Ankerstange, die einen Schaft mit einem sich zu seinem freien Ende hin erweiternden Konus aufweist. Der Schaft ist von einer Hülse umgeben, die entlang der Ankerstange längsverschiebbar ist. Die Hülse ist mit Schneidlappen ausgestattet, die durch axiale Schlitze voneinander getrennt sind und sich von einem plastischen Gelenk in Richtung des Konus erstrecken. Im Bereich ihrer freien Vorderenden sind die Schneidlappen mit Schneiden ausgestattet. Die Schneidlappen sind durch Aufschieben der Hülse auf den Konus radial ausstellbar. Das freie Vorderende der Hülse ist im Bereich der Schneidlappen axial umgefalzt. Die axiale Länge der umgefalzten Abschnitte entspricht etwa der Länge der axialen Schlitze. Das plastische Gelenk, um das die Schneidlappen durch Aufschieben der Hülse auf den Konus radial ausstellbar sind, befindet sich im Übergang der umgefalzen Abschnitte zum Mantel der Hülse.

Die Hülse ist im Bereich ihrer Schneidlappen umgefalzt. Dadurch weisen die Schneidlappen die doppelte Wandstärke der Hülse auf. Die Wandstärke der Hülse kann daher dünner gewählt werden, ohne die Festigkeit der Schneidlappen zu beeinträchtigen, die bei der Erstellung der Hinterschneidung sehr grossen radialen Kräften und wegen der Rotation der Hülse insbesondere sehr grossen in Umfangsrichtung wirkenden Kräften ausgesetzt sind. Indem für die Hülse ein Material mit geringerer Wandstärke einsetzbar ist, ist die Hülse kostengünstiger in der Herstellung. Das plastische Gelenk, um das die Schneidlappen radial ausstellbar sind, ist im Übergang der umgefalzten Abschnitte zum Mantel der Hülse vorgesehen und bedarf keiner weiteren Bearbeitung. Umlaufende radiale Nuten oder Einstiche können entfallen. Dadurch kann der Herstellvorgang für die Hülse weiter vereinfacht werden. Auf aufwendige spanabhebende Herstellverfahren kann verzichtet werden.

In einer vorteilhaften Ausführungsvariante der Erfindung sind die umgefalzten Abschnitte der Hülse innerhalb der Hülse angeordnet und umgeben sie den Schaft der Ankerstange. Der mindestens erforderliche Durchmesser der Aufnahmebohrung ist durch den grössten Aussendurchmesser des selbstschneidenden Hinterschnittankers festgelegt. Indem das freie Vorderende der Hülse nach innen umgebogen ist, bleibt der Aussendurchmesser der Hülse über ihre Längserstreckung weitgehend erhalten. Damit muss der Durchmesser der Aufnahmebohrung nur unwesentlich grösser sein als der Aussendurchmesser der Hülse.

Mit Vorteil weist der Schaft in dem an die umgefalzten Abschnitte der Hülse angrenzenden Bereich einen kleineren Durchmesser auf als in dem nach rückwärts anschliessenden Abschnitt. Auf diese Weise werden die nach innen umgefalzten Abschnitte der Hülse von dem Bereich der Ankerstange, in dem diese einen kleineren Durchmesser aufweist, aufgenommen. Dies erlaubt eine bestmögliche Anpassung des Durchmessers der Ankerstange an den Innendurchmesser der Hülse. Dabei wird darauf geachtet, dass der Durchmesser des Schaftes maximal bis zum Kerndurchmesser der Ankerstange abnimmt. Auf diese Weise bleibt die standardgemäss dimensionierbare Zugfähigkeit der Ankerstange zuverlässig erhalten.

Eine besonders gute Bohrlochausnutzung ergibt sich, wenn das Verhältnis des grössten Aussendurchmessers der Hülse zum Aussendurchmesser der Ankerstange von etwa 1,3 bis etwa 1,6 beträgt.

Die herstellungstechnischen Vorteile des erfindungsgemäss ausgebildeten selbstschneidenden Hinterschnittankers können noch dadurch vergrössert werden, dass die Hülse ein Blechbiegestanzteil ist. Blechbiegestanzteile eignen sich insbesondere sehr gut für massentechnische Herstellverfahren. Dies verringert die Gestehungskosten des Hinterschnittankers noch weiter.

Aus Gründen der Vereinfachung der Herstellung des selbstschneidenden Hinterschnittankers sind die Schneiden als gehärtete Vorsprünge im Bereich der freien Enden der Schneidlappen ausgebildet und an deren Umfangsflächen befestigt. Vorzugsweise sind die gehärteten Vorsprünge Schweisspunkte und/oder aufgeschweisste Federstahlstücke. Die auf die Umfangsfläche der Schneidlappen aufgebrachten Schweisspunkte müssen nicht mehr gehärtet werden. Analoges gilt für die aufgeschweissten Federstahlstücke, die durch den Schweissvorgang gehärtet werden. Dabei wird durch die nur kurzzeitige, lokal begrenzte Wärmeeinwirkung auf die Schneidlappen ein Verspröden des Material im plastischen Gelenk zuverlässig verhindert. Die erfindungsgemäss ausgebildeten Schneiden sind materialschlüssig mit den Schneidlappen verbunden. Diese Art der Verbindung ist stabiler als die formschlüssige Halterung der Hartmetallstifte in Aufnahmen in der Oberfläche der Schneidlappen, die auch durch zusätzliches Löten nicht wesentlich verbessert wird. Dadurch ist die Gefahr beseitigt, dass die Schneiden sich bei der hohen Beanspruchung während des Fräsens der Hinterschneidung lockern und abfallen. Die Schweisspunkte und/oder aufgeschweissten Federstahlstifte können noch umformtechnisch bearbeitet, beispielsweise geprägt, werden, um ihnen die Gestalt von Schneiden mit Spanwinkel, Keilwinkel und Freiwinkel zu verleihen. In der Regel ist aber eine Nachbearbeitung der Schweisspunkte und/oder aufgeschweissten Federstahlstücke nicht erforderlich.

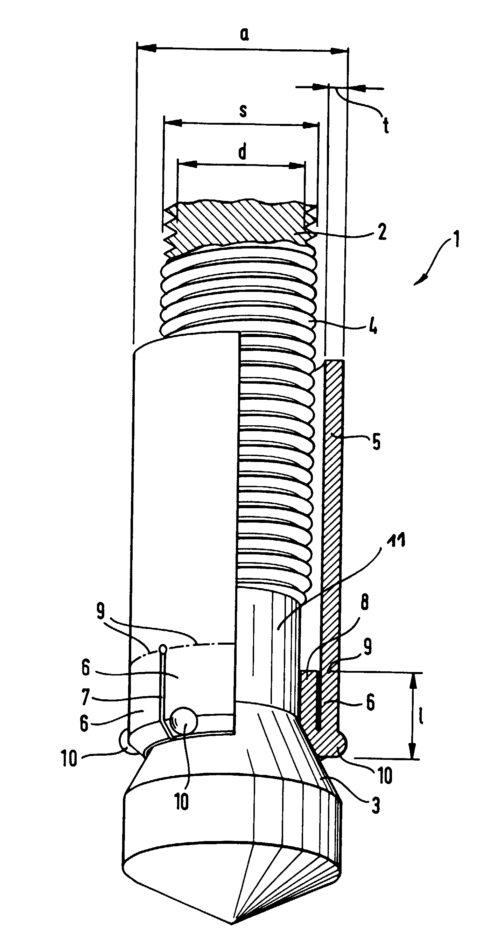

Im folgenden wird die Erfindung unter Bezugnahme auf die einzige Zeichnung näher erläutert, in der ein Ausführungsbeispiel des erfindungsgemässen selbstschneidenden Hinterschnittankers mit teilweise geschnittener Hülse dargestellt ist. Der gesamthaft mit dem Bezugszeichen 1 bezeichnete selbstschneidende Hinterschnittanker besitzt eine Ankerstange, die einen Schaft 2 mit einem damit verbundenen Konus 3 umfasst. Der Konus 3 erweitert sich zu seinem freien Vorderende. Die Ankerstange ist als Gewindestange ausgebildet und weist ein Aussengewinde 4 auf, dass sich bis zu ihrem rückwärtigen Ende erstreckt und als Lastangriffsmittel dient, und besitzt einen Kerndurchmesser d. Der über die Aussenflanken des Gewindes 4 gemessene Aussendurchmesser der Ankerstange ist mit s bezeichnet. Der Schaft 2 ist von einer Hülse 5 umgeben, die entlang des Schaftes 2 verschiebbar ist und vorzugsweise ein Blechstanzteil ist. An ihrem dem Konus 3 zugewandten vorderen Bereich ist die Hülse 5 mit Schneidlappen 6 versehen, die durch axiale Schlitze 7 voneinander getrennt sind.

An den Aussenseiten der freien Vorderenden der Schneidlappen 6 sind Schneiden 10 angeordnet. Gemäss dem dargestellten Ausführungsbeispiel sind die Schneiden von Schweisspunkten gebildet, die auf die Aussenseite der Schneidlappen 6 aufgebracht sind. Anstelle von Schweisspunkten könnten die Schneiden auch beispielsweise von Federstahlstücken gebildet sein, die auf die Aussenseite der Schneidlappen aufgeschweisst sind. Die Federstahlstücke werden während des Schweissvorgangs gehärtet. Im Bereich der Schneidlappen 6 weist die Hülse 5 einen umgefalzten Abschnitt 8 auf. Die Länge l der umgefalzten Abschnitte 8 entspricht der Länge der axialen Schlitze 7. Die Schneidlappen 6 besitzen somit die doppelte Wandstärke t der Hülse 5. Die Schneidlappen 6 sind durch Vorschieben der Hülse 5 auf den Konus 3 um ein plastisches Gelenk 9 radial ausstellbar. Das plastische Gelenk 9 befindet sich aufgrund der Dimensionierung der Länge l der umgefalzten Abschnitte 8 gerade im Übergang von dem Bereich der Hülse 5 mit doppelter Wandstärke zum Abschnitt mit einfacher Wandstärke t. Indem die Hülse 5 während des axialen Vorschubes um ihre Achse rotiert wird, fräsen die Schneiden 10 eine Hinterschneidung in eine zylindrische Aufnahmebohrung.

Der Schaft 2 der Ankerstange ist im an die umgefalzen Abschnitte 8 der Hülse 5 angrenzenden Bereich 11 verjüngt ausgebildet. Dabei ist der Durchmesser des verjüngten Bereichs 11 maximal bis zum Kerndurchmesser d des Schaftes 2 reduziert. Die Wandstärke t der Hülse 5 ist derart bemessen, dass das Verhältnis des grössten Aussendurchmessers a der Hülse 5 zum Aussendurchmesser s der Ankerstange von etwa 1,3 bis etwa 1,6 beträgt. Insbesondere bei dem dargestellten Ausführungsbeispiel des selbstschneidenden Hinterschnittankers 1, bei dem die umgefalzten Abschnitte 8 im Inneren der Hülse 5 angeordnet sind, ergibt sich somit eine sehr gute Bohrlochausnutzung. Es versteht sich jedoch, dass die Hülse 5 auch nach aussen umgefalzt sein kann, so dass die umgefalzten Abschnitte 8, die die Schneidlappen bilden, den ursprünglichen Aussendurchmesser der Hülse 5 überragen.

Der anhand des dargestellten Ausführungsbeispiels erläuterte erfindungsgemässe selbstschneidende Hinterschnittanker kann ein Hinterschnittanker des Typs sein, dessen Ankerstange während des Setzvorgangs am Grund der Aufnahmebohrung aufstehen muss, um die Hülse rotierend auf den Konus auftreiben zu können. Der Hinterschnittanker kann aber auch für eine bohrlochtiefenunabhängige Montage vorgesehen sein, in der die Ankerstange frei schwebend über dem Grund der Aufnahmebohrung gehalten ist, während die Hülse auf den Konus aufgeschoben wird. Die Rotation der Hülse wird dabei beispielsweise durch an der Ankerstange angeordnete Drehmitnehmer erreicht, die in die axialen Schlitze zwischen den Schneidlappen eingreifen, während die Ankerstange gedreht wird.

## Patentansprüche

1. Selbstschneidender Hinterschnittanker mit einer Ankerstange, die einen Schaft (2) mit einem sich zu seinem freien Ende hin erweiternden Konus (3) aufweist, und einer den Schaft (2) umgebenden Hülse (5), die entlang der Ankerstange längsverschiebbar ist und mit Schneidlappen (6) ausgestattet ist, die durch axiale Schlitze (7) voneinander getrennt sind und sich von einem plastischen Gelenk (9) in Richtung des Konus (3) erstrecken und im Bereich ihrer freien Vorderenden mit Schneiden (10) ausgestattet sind, wobei die Schneidlappen (6) durch axiales Aufschieben der Hülse (5) auf den Konus (3) radial ausstellbar sind, **dadurch gekennzeichnet**, dass das freie Vorderende der Hülse (5) im Bereich der Schneidlappen (6) axial umgefalzt ist, wobei die axiale Länge (l) der umgefalzten Abschnitte (8) etwa der Länge der axialen Schlitze (7) entspricht und das plastische Gelenk (9) im Übergang der umgefalzen Abschnitte (8) zum Mantel der Hülse (5) vorgesehen ist.

2. Selbstschneidender Hinterschnittanker nach Anspruch 1, dadurch gekennzeichnet, dass die umgefalzten Abschnitte (8) der Hülse (5) innerhalb der Hülse (5) angeordnet sind und um den Schaft (2) der Ankerstange angeordnet sind.

3. Selbstschneidender Hinterschnittanker nach Anspruch 2, dadurch gekennzeichnet, dass der Schaft (2) in dem an die umgefalzten Abschnitte (8) der Hülse (5) angrenzenden Bereich (11) einen kleineren Durchmesser aufweist als in dem nach rückwärts anschliessenden Abschnitt.

4. Selbstschneidender Hinterschnittanker nach Anspruch 3, dadurch gekennzeichnet, dass der Durchmesser des Schaftes (2) im an die umgefalzten Abschnitte (8) angrenzenden Bereich (11) maximal bis zum Kerndurchmesser (d) der Ankerstange abnimmt.

5. Selbstschneidender Hinterschnittanker nach Anspruch 3 oder 4, dadurch gekennzeichnet, dass das Verhältnis des grössten Aussendurchmessers (a) der Hülse (5) zum Aussendurchmesser (s) der Ankerstange (2) von etwa 1,3 bis etwa 1,6 beträgt.

6. Selbstschneidender Hinterschnittanker nach einem der vorangehenden Ansprüche, dadurch gekennzeichnet, dass die Hülse (5) ein Blechstanzteil ist.

7. Selbstschneidender Hinterschnittanker nach einem der vorangehenden Ansprüche, dadurch gekennzeichnet, dass die Schneiden (10) als gehärtete Vorsprünge im Bereich der freien Enden der Schneidlappen (6) ausgebildet sind, die an deren Umfangsflächen befestigt sind.

8. Selbstschneidender Hinterschnittanker nach Anspruch 6, dadurch gekennzeichnet, dass die gehärteten Vorsprünge (10) Schweisspunkte und/oder aufgeschweisste Federstahlstücke sind.

## Claims

1. Selfcutting undercut anchor, comprising an anchor rod with a shaft (2) with a cone (3) which widens towards its free end, and a sleeve (5) which encases the shaft (2) and which is longitudinally displaceable along the anchor rod and fitted with cutting tabs (6) which are separated from each other by axial slots (7) and which extend from a plastic hinge (9) in the direction of the cone (3) and fitted in the area of their free front ends with cutters (10), and the cutting tabs (6) are radially expandable by axially pushing the sleeve (5) onto the cone (3), **characterised in that** the front end of the sleeve (5) is axially folded in the area of the cutting tabs (6), and the axial length (I) of the folded sections (8) corresponds approximately with the length of the axial slots (7), and the plastic hinge (9) is provided in the transitional area of the folded sections (8) toward the casing of the sleeve (5).

2. Selfcutting undercut anchor according to Claim 1, **characterised in that** the folded sections (8) of the sleeve (5) are arranged within the sleeve (5) and arranged around the shaft (2) of the anchor rod.

3. Selfcutting undercut anchor according to Claim 2, **characterised in that** the shaft (2) has in the area (11) adjacent the folded sections (8) of the sleeve (5) a smaller diameter than in the rearwardly adjacent section.

4. Selfcutting undercut anchor according to Claim 3, **characterised in that** the diameter of the shaft (2) in the area (11) adjacent the folded sections (8) decreases maximum to the core diameter (d) of the anchor rod.

5. Selfcutting undercut anchor according to Claim 3 or 4, **characterised in that** the ratio between the largest outside diameter (a) of the sleeve (5) and the outside diameter (s) of the anchor rod (2) is between approximately 1.3 and approximately 1.6.

6. Selfcutting undercut anchor according to one of the above claims, **characterised in that** the sleeve (5) is a stamped metal part.

7. Selfcutting undercut anchor according to one of the above claims, **characterised in that** the cutters (10) are designed as hardened protrusions in the area of the free ends of the cutting tabs (6) which are attached to their peripheral surfaces.

8. Selfcutting undercut anchor according to Claim 6, **characterised in that** the hardened protrusions (10) are welding points and/or welded on spring steel elements.

## Revendications

1. Disposif d'ancrage autotaraudeur à dépouille postérieur comprenant une tige d'ancrage, pourvue d'une queue (2) avec un cône (3) s'élargissant vers l'extrémité libre de celle-ci, et comprenant un manchon (5) qui entoure la queue (2), qui peut coulisser dans le sens longitudinal le long de la tige d'ancrage et qui est muni de pattes coupantes (6), lesquelles sont séparées les unes des autres par des fentes axiales (7), s'étendent en direction du cône (3) à partir d'une articulation plastique (9) et sont pourvues de parties coupantes (10) dans la zone de leur extrémité avant libre, les pattes coupantes (6) pouvant être déployées radialement par un coulissement axial du manchon (5) sur le cône (3), caractérisé en ce que l'extrémité avant libre du manchon (5) est rabattue axialement dans la zone des pattes coupantes (6), la longueur axiale (1) des portions rabattues (8) correspondant environ à la longueur des fentes axiales (7), et l'articulation plastique (9) se trouvant à la transition entre les portions rabattues (8) et la surface périphérique du manchon (5).

2. Dispositif d'ancrage autotaraudeur à dépouille selon la revendication 1, caractérisé en ce que les portions rabattues (8) du manchon (5) se trouvent à l'intérieur du manchon (5) et sont disposées autour de la queue (2) de la tige d'ancrage.

3. Dispositif d'ancrage autotaraudeur à dépouille selon la revendication 2, caractérisé en ce que, dans la zone (11) adjacente aux portions rabattues (8) du manchon (5), la queue (2) présente un diamètre plus petit que dans la portion qui la prolonge vers l'arrière.

4. Dispositif d'ancrage autotaraudeur à dépouille selon la revendication 3, caractérisé en ce que, dans la zone (11) adjacente aux portions rabattues (8), le diamètre de la queue (2) diminue au maximum jusqu'au diamètre d'âme (d) de la tige d'ancrage.

5. Dispositif d'ancrage autotaraudeur à dépouille selon la revendication 3 ou 4, caractérisé en ce que le rapport du plus grand diamètre extérieur (a) du manchon (5) au diamètre extérieur (s) de la tige d'ancrage (2) est d'environ 1,3 à environ 1,6.

6. Dispositif d'ancrage autotaraudeur à dépouille selon une des revendications précédentes, caractérisé en ce que le manchon (5) est une pièce en tôle découpée.

7. Dispositif d'ancrage autotaraudeur à dépouille selon une des revendications précédentes, caractérisé en ce que les parties coupantes (10) sont conformées en saillies durcies dans la zone des extrémités libres des pattes coupantes (6) sur la surface périphérique desquelles elles sont fixées.

8. Dispositif d'ancrage autotaraudeur à dépouille selon la revendication 6, caractérisé en ce que les saillies durcies (10) sont des points de soudage et/ou des morceaux soudés d'acier à ressorts.
